Europäisches Patentamt

European Patent Office

Office européen des brevets

(11) Publication number: **0 238 472**
**A2**

## (12) EUROPEAN PATENT APPLICATION

(21) Application number: 87870024.4

(22) Date of filing: 23.02.87

(51) Int. Cl.⁴: **B 32 B 5/24**

(30) Priority: 24.02.86 US 831944

(43) Date of publication of application:
23.09.87 Bulletin 87/39

(84) Designated Contracting States:
AT BE CH DE ES FR GB IT LI LU NL SE

(71) Applicant: MONSANTO COMPANY
Patent Department 800 North Lindbergh Boulevard
St. Louis, Missouri 63166 (US)

(72) Inventor: Holtrop, James Scott
178 Quarry Brook Drive
South Windsor Connecticut 06074 (US)

Maurer, Richard Paul
500 Mountain Road
Wilbraham Massachusetts 01095 (US)

Prokop, Edward Joseph
7 Drummer Trail
Bloomfield Connecticut 06002 (US)

(74) Representative: McLean, Peter et al
Monsanto Europe S.A. Patent Department Avenue de
Tervuren 270-272 Letter Box No 1
B-1150 Brussels (BE)

(54) Thermoformable laminate structure.

(57) A moinsture-resistant, moldable, thermoformable laminate
structure comprising a layer of foamed thermoplastic material
having a layer of fiberglass bonded to at least one surface.

**Description**

THERMOFORMABLE LAMINATE STRUCTURE

BACKGROUND OF THE INVENTION

This invention relates to thermoplastic material, and particularly to a thermoformable laminate structure, comprising foam thermoplastic resins. More particularly, this invention relates to a moisture-resistant, moldable, thermoformable laminate structure which may be molded into complex shapes. More particularly, this invention relates to a thermoformable laminate structure having a coating formed from fiberglass which is covered with a polymeric resin.

DESCRIPTION OF THE PRIOR ART

Foam thermoplastic laminates have been used for many years. These laminates were most often formed as a sandwich structure in which the foam thermoplastic material was enclosed between liner board facings. An example of this construction is a polystyrene foam sheet which has a kraft liner board facing on each side. This laminate has been used by cutting and scoring or by pressing the board and applying a resin to fix the pressed shape. However, the kraft liner board facing is a paper material which is not easily molded and which has a tendency to wrinkle during any molding of the laminate structure.

Other efforts have been made to provide the laminate structure which may more easily be molded. A thermoplastic laminate has been formed of a layer of foam styrene-maleic anhydride polymer to which a thermoplastic polymer skin is bonded. This laminate is moldable without the problems caused by the earlier developed paper facings.

More recent efforts have provided laminate structures formed of molded fiberglass which contains a phenol formaldehyde polymer as a binder. A rayon scrim is attached to one side of a fiberglass batt which is then compression-molded to the desired shape.

A further thermoformable laminate structure is shown in U. S. Patent No. 4,489,126. A layer of foamed thermoplastic material has a coating bonded to each of its surfaces. The coating is a fabric impregnated with an acrylic resin which has a softening temperature greater than approximately 130°C.

SUMMARY OF THE INVENTION

It is an object of this invention to provide a moldable, thermoformable laminate structure.

It is a further object of this invention to provide a moisture-resistant, moldable, thermoformable laminate structure formed from foamed thermoplastic resins which are faced by a fiberglass layer.

It is yet another object of this invention to provide a moisture resistant, moldable, thermoformable laminate structure formed from a layer of foamed thermoplastic material which is faced by a fiberglass layer coated with an acrylic resin.

An additional object of this invention is to provide a method for fabricating the moisture-resistant, moldable, thermoformable laminate structure.

These and other objects are obtained by the thermoformable laminate structure of this invention and the method of fabrication described hereinafter.

The moisture-resistant, moldable, thermoformable laminate structure of this invention has a layer of a foamed thermoplastic material such as foamed styrene-maleic anhydride which has first and second surfaces. A fiberglass layer is bonded to at least one of the first and second surfaces of the layer of foamed thermoplastic material. It is preferred that the fiberglass layer be bonded to the surface of the layer of foamed thermoplastic material by coating the surface with a layer of acrylic resin and heat laminating the fiberglass layer to the resin coated surface. The fiberglass layer may also be impregnated with an acrylic resin and bonded to the surface of the layer of foamed thermoplastic material. Also, the fiberglass layer may be placed against the surface of the layer of foamed thermoplastic material and an acrylic resin may then be spread over the fiberglass layer to bond it to the surface.

This invention includes the method for fabricating the laminate structure. The method includes preparing a layer of foamed thermoplastic material having first and second surfaces, coating at least one surface of the layer of foamed thermoplastic material with an adhesive which is preferably an acrylic resin, and bonding a layer of fiberglass to the adhesive coated surface to form a moldable thermoformable laminate structure. The method may also include coating the layer of fiberglass with a further layer of resin or covering the fiberglass layer with a layer of a polyolefin film and bonding the film to the fiberglass layer.

An alternate method for fabricating the laminate structure includes preparing a layer of foamed thermoplastic material such as styrene-maleic anhydride having first and second surfaces, coating a fiberglass layer with a resin which is preferably an acrylic resin, drying the resin impregnated fiberglass layer, and bonding the dried resin impregnated fiberglass layer to at least one surface of the layer of foamed thermoplastic material to form a moldable, thermoformable laminate structure.

DESCRIPTION OF THE PREFERRED EMBODIMENT

The moisture-resistant, moldable, thermoformable laminate structure of this invention has a layer of a foamed thermoplastic material which has first and second surfaces. The layer of thermoplastic material is preferably a layer of foamed styrene-maleic anhydride polymer; however, other foamed thermoplastic materials such as foamed polystyrene, foamed polyethylene, foamed styrene-acrylonitrile polymer and other similar materials may also be used. To form the laminate structure, a coating is bonded to at least one of the first and second surfaces of the foamed thermoplastic material. The coating is preferably a layer of fiberglass which is adhesively bonded to the at least one surface.

Alternatively, the coating may be a resin-impregnated layer of fiberglass which is bonded to the at least one surface or a layer of fiberglass which is placed against the surface of the foamed thermoplastic material before a resin layer is placed over the fiberglass layer to bond it to the surface. The fiberglass layer may be a nonwoven fabric. It may even be a layer of parallel fiberglass threads. A thick layer of fiberglass is unnecessary; thus, the fiberglass layer may have the thickness of a single layer of fabric or of parallel threads of fiberglass. It may be thicker, however, its thickness will be less than the thickness of the layer of foamed thermoplastic material.

The resin used with the fiberglass layer is preferably an acrylic resin but other resins, such as a phenolic resin or a polyurethane resin, may also be used. The use of an acrylic resin, which is preferred, eliminates the handling problems, such as storage to prevent curing and emissions of volatile materials which are associated with the use of phenolic resins.

The fiberglass layer is bonded to at least one surface of the layer of foamed thermoplastic material. This may be accomplished by heat treatment during the laminating or by an adhesive which is preferably water dispersed. Alternatively, the fiberglass layer may be placed against the surface of the layer of foamed thermoplastic material and may then be secured to the surface by bonding a plastic polymer skin over the fiberglass layer. An acrylic resin, phenolic resin, or polyurethane resin, may also be used to bond the fiberglass layer to the surface of the foamed thermoplastic material by spreading the resin over the fiberglass layer after it is placed against the surface of the foamed thermoplastic material. It is also possible to add fiberglass fibers to the resin to form a fiber-reinforced resin which may be spread on the surface of the foamed thermoplastic material.

The moldable, thermoformable laminate structure of this invention is manufactured by producing a layer of foamed thermoplastic material having first and second surfaces, coating at least one of the first and second surfaces with an adhesive, and bonding a layer of fiberglass to the adhesive coated surface. The layer of fiberglass may be coated with an additional layer of resin or it may be covered by a layer of a thermoplastic polymer skin which is bonded to the fiberglass layer. The additional layer will encapsulate the fiberglass layer to provide an outer surface on the laminate structure which can be more easily handled.

The moldable, thermoformable laminate structure of this invention is also manufactured by producing a layer of foamed thermoplastic material having first and second surfaces, impregnating a layer of fiberglass with a resin dispersed within a solvent, drying the resin-impregnated layer of fiberglass, and bonding the dried resin-impregnated layer of fiberglass to at least one surface of the layer of foamed thermoplastic material with an adhesive to form a laminate structure. The addition of the resin-impregnated layer of fiberglass to the surface of the layer of foamed thermoplastic material provides a laminate structure which is moisture-resistant and moldable and which will retain its molded shape for extended periods of time during later use.

The moldable, thermoformable laminate structure of this invention may also be manufactured by producing a layer of foamed thermoplastic material having first and second surfaces, placing a layer of fiberglass against at least one of the first and second surfaces, and spreading a layer of an acrylic resin, a phenolic resin or a polyurethane resin over the layer of fiberglass to bond the fiberglass to the surface of the foamed thermoplastic material. Instead of the layer of resin, a thermoplastic polymer skin may be placed over the fiberglass layer and bonded to the surface of the layer of foamed thermoplastic material. When the thermoplastic polymer skin is used, a layer of adhesive may be necessary between the layer of foamed thermoplastic material and the layer of fiberglass. An example of the thermoplastic polymer skin would be a polyolefin film such as film made of polyethylene, polypropylene, other similar materials or polyvinyl chloride. Films made from polymers or blends of low density polyethylene and linear low density polyethylene and from high density polyethylene have been satisfactory in this service. The thickness of the thermoplastic polymer skin is typically within the range of approximately 0.01 millimeters to approximately 0.08 millimeters and is preferably approximately 0.04 millimeters.

The layer of thermoplastic material is preferably foamed styrene-maleic anhydride polymer. Other foamed thermoplastic material such as foamed polystyrene, foamed styrene acrylonitrile, foamed polyethylene, and other similar foamable materials may also be used. While there are no limits on the thickness of the layer of foamed thermoplastic material, the thickness is usually limited to that which is easily laminated. The thickness of the layer of thermoplastic material used in this invention will generally be less than 30 millimeters and it is preferred that the thickness of the layer of foamed thermoplastic material be between approximately 2 millimeters and approximately 20 millimeters.

A layer of fiberglass is bonded to at least one surface of the layer of foamed thermoplastic material. The layer of fiberglass may be a nonwoven fiberglass fabric. It is also possible to use fiberglass fibers mixed into a resin to form a fiber reinforced resin layer. The thickness of the fiberglass layer, when applied to the surface of the layer of foamed thermoplastic resin is typically within the range of from approximately 0.1 millimeters to approximately 1.0 millimeters.

The resin used to impregnate the layer of fiberglass is preferably an acrylic resin. It is not required that the acrylic resin used in this invention be water-soluble as satisfactory results have also been achieved using methanol-soluble acrylic resins. It is also possible to use resins other than acrylic resins such as phenolic resins and polyurethane resins. When polyurethane is used, it is a thermoplastic polyurethane coating.

The adhesive used to bond the laminate structure is also preferably an acrylic resin; however, phenolic and polyurethane adhesives may be used. A preferred adhesive is Gelva® 2404, a high shear, acrylic, pressure sensitive adhesive produced by Monsanto Company. Alternatively, a preferred polyurethane adhesive is Conap UC-32, produced by Conap, Inc.

The moldable, thermoformable laminate structure of this invention may be manufactured having a layer of fiberglass against only one surface of the layer of foamed thermoplastic material. When such a laminate is manufactured, the second surface of the foamed thermoplastic material may remain uncoated; however, it is preferred that the second surface also be coated. The second surface of the layer of foamed thermoplastic material may be coated by bonding a thermoplastic polymer skin to the surface, by bonding a fabric layer such as a nonwoven or a spun-bonded nonwoven fabric to the surface, or by the addition of another layer of foamed thermoplastic material such as foamed polyurethane to the surface. It is also possible to use a combination of these or similar materials to form a plurality of layers on the second surface of the layer of foamed thermoplastic material.

A layer of fabric may be used as the outer layer of the thermoformable laminate structure. When a plurality of layers are bonded to the first surface and the second surface of the layer of foamed thermoplastic material, a fabric layer may be bonded to one or both of the outer surfaces. The layer of fabric will provide a decorative finish to the laminate structure; however, the layer of fabric also improves the acoustical absorption of the laminate structure and covers any minor imperfections which may have occurred during the manufacturing process. The layer of fabric may be formed of a woven or a nonwoven fabric. The desired final use for the laminate structure must be considered in selecting the fabric to be used as different fabrics such as polyesters, rayon or nylon have different characteristics. A preferred fabric is a nonwoven polyester fabric, for example, a nonwoven polyester fabric such as Duon produced by Phillips Fibers, Inc., a Division of Phillips Petroleum Company. Another preferred fabric is a nonwoven, spun-bonded, polyester fabric such as Reemay produced by E. I. duPont de Nemours and Co. When the acoustic performance of the laminate structure is important, an outer layer of fabric will improve the performance. It is important, in theat instance, that the fabric not be saturated with the adhesive or crushed during the application of the fabric to the surface of the laminate structure.

The bonding of a layer of fiberglass to both the first and second surface of the layer of foamed thermoplastic material does not prevent the addition of further material to the laminate structure. It is also within the contemplation of this invention to add layers to one or both surfaces of the layer of foamed thermoplastic material in addition to the layer of fiberglass. It is thus contemplated to have a layer of fiberglass bonded to the first surface of the layer of foamed thermoplastic material while a plurality of layers of material are bonded to the second surface. An example of this would be to bond a layer of fiberglass to the second surface of the foamed thermoplastic material, a layer of nonwoven fabric to the layer of fiberglass, a second layer of foamed thermoplastic material, for example, polyurethane or polystyrene, to the layer of fabric, and a second layer of fabric to the second layer of foamed thermoplastic material. Among the many possible uses of the laminate structure of this invention is the possibility of its use to form headliners for use in automobiles. For such a use, the multilayer laminate structure described above is particularly desirable.

The following examples illustrate the laminate structures made in accordance with this invention.

EXAMPLE 1

A laminate structure was produced by bonding a nonwoven fiberglass cloth to the first surface of a foamed layer of styrene-maleic anhydride using a polyurethane adhesive, Conap UC-32. A polyethylene film was bonded to the nonwoven fiberglass cloth using heat and pressure, that is by heat lamination.

EXAMPLE 2

The laminate structure of Example 1 was produced. In addition to the layer of fiberglass bonded to the first surface, a coating was bonded to the second surface of the layer of foamed styrene-maleic anhydride polymer. A nonwoven polyester fabric was bonded to the second surface using Gelva® 2404 acrylic adhesive produced by Monsanto Company. The laminate structure was formed and tested at elevated temperatures, that is at approximately 90°C. The thermoformed laminate structure maintained its rigidity, strength and dimensional stability.

EXAMPLE 3

A layer of foamed styrene-maleic anhydride copolymer was coated on its first surface by a polyurethane resin. A fiberglass mat was applied to the first surface and heat laminated in a press. The laminated structure was thermoformed and tested at elevated temperatures, approximately 90°C. The structure retained its rigidity, strength and dimensional stability during the test.

EXAMPLE 4

A layer of foamed styrene-maleic anhydride having first and second surfaces was produced. An acrylic adhesive was spread on the first surface of the layer of styrene-maleic anhydride foam and a layer of fiberglass coated with an acrylic resin was bonded to the first surface by the acrylic adhesive. More than one laminated structure was produced. On some, a layer of polyethylene film was bonded to the layer of acrylic-coated fiberglass. An acrylic adhesive was used to coat the second surface of the layer of foamed styrene-maleic anhydride. A second layer of fiberglass coated with an acrylic resin was bonded to the second surface by the acrylic adhesive. On some of the laminated structures, a nonwoven polyester fabric was bonded to the second layer of fiberglass coated with acrylic resin. When tested, the laminate structures maintained their rigidity, strength and dimensional stability.

EXAMPLE 5

A thermoformable laminate structure was formed from a layer of foamed styrene-maleic anhydride having first and second surfaces. An acrylic adhesive was spread on the first surface of the layer of styrene-maleic anhydride. An uncoated fiberglass mat formed as a nonwoven fiberglass mat with a silane binder, was bonded to the first surface of the layer of styrene-maleic anhydride by the adhesive layer. The uncoated glass mat was covered by a layer of polyethylene film. The second surface of the layer of foamed styrene-maleic anhydride was also coated by an adhesive and a nonwoven polyester fabric was bonded to the surface. When tested, the laminate structures maintained their rigidity, strength and dimensional stability.

The rigidity, strength and dimensional stability of the laminate structures were tested at 90°C. For each test, the laminate structure was molded into a shape. The molded piece was held at 90°C with a relative humidity of 90% for six hours. The molded piece was then held at 90°C with a relative humidity of nearly zero for twelve hours. Finally, the molded piece was again held at 90°C with 90% relative humidity for six hours. The dimensions of the molded pieces changed less than two and one-half percent (2.5%) during the test cycle.

As will be apparent to those skilled in the art, the inventive concepts set forth herein can find many applications in the art of moldable, thermoformable laminate structures and many variations on and modifications to the embodiments described above may be made without departure from the spirit and scope of this invention.

**Claims**

1. A moisture-resistant, moldable, thermoformable laminate structure comprising:
    (a) a layer of foamed thermoplastic material, said layer having first and second surfaces; and
    (b) a layer of fiberglass bonded to at least one of said first and second surfaces of said layer of foamed thermoplastic materials.

2. The laminate structure of Claim 1 wherein said layer of foamed thermoplastic material is selected from the group consisting of foamed polystyrenerene, foamed styrene maleic anhydride polymer, foamed polyethylene, foamed styrene-acrylonitrile and other foamed copolymers of styrene.

3. The laminate structure of Claim 2 wherein said layer of foamed thermoplastic material is foamed polystyrene.

4. The laminate structure of Claim 2 wherein said layer of foamed thermoplastic material is foamed styrene-maleic anhydride polymer.

5. The laminate structure of Claim 1 wherein said layer of fiberglass is bonded to said first and second surfaces of said foamed thermoplastic material.

6. The laminate structure of Claim 1 wherein said layer of fiberglass is impregnated with a resin.

7. The laminate structure of Claim 6 wherein said layer of fiberglass is impregnated with an acrylic resin.

8. The laminate structure of Claim 6 wherein said layer of fiberglass is impregnated with a polyurethane resin.

9. A moisture-resistant, moldable, thermoformable laminate structure comprising:
    (a) a layer of foamed thermoplastic material, said layer having first and second surfaces; and
    (b) a layer of fiberglass bonded to said first surface of said layer of foamed thermoplastic material;
    (c) a second layer of fiberglass bonded to said second surface of said layer of foamed thermoplastic material, a layer of nonwoven fabric bonded to said second layer of fiberglass, a second layer of foamed thermoplastic material bonded to said layer of nonwoven fabric and a second layer of nonwoven fabric bonded to said second layer of foamed thermoplastic material.

10. The laminate structure of Claim 9 wherein said layer of foamed thermoplastic material is selected from the group consisting of foamed polystyrenerene, foamed styrene maleic anhydride polymer, foamed polyethylene, foamed styrene-acrylonitrile and other foamed copolymers of styrene.

11. The laminate structure of Claim 10 wherein said layer of foamed thermoplastic material is foamed styrene maleic anhydride.

12. The laminate structure of Claim 10 wherein said layer of foamed thermoplastic material is foamed polystyrene.

13. The laminate structure of Claim 9 wherein said first and second layers of fiberglass are bonded to said first and second surfaces of said layer of foamed thermoplastic material with a resin.

14. The laminate structure of Claim 13 wherein said resin is an acrylic resin.

15. The laminate structure of Claim 13 wherein said resin is a polyurethane resin.

16. The laminate structure of Claim 9 wherein said first and second layers of fiberglass are impregnated with a resin.

17. The laminate structure of Claim 16 wherein said first and second layers of fiberglass are impregnated with an acrylic resin.

18. The laminate structure of Claim 16 wherein said first and second layers of fiberglass are impregnated with a polyurethane resin.

19. A method of manufacturing a moldable, thermoformable laminate structure comprising:
    (a) producing a layer of foamed thermoplastic material having first and second surfaces;
    (b) coating at least one of said first and second surfaces with an adhesive; and

c) bonding a layer of fiberglass to said adhesive coated surface of said foamed thermoplastic material.

20. The method of Claim 19 further including bonding a thermoplastic polymer skin to said layer of fiberglass.

21. A method of manufacturing a moldable, thermoformable laminate structure comprising:

(a) producing a layer of foamed thermoplastic material having first and second surfaces;

(b) impregnating a layer of fiberglass with a resin dispersed within a solvent;

(c) drying said resin-impregnated layer of fiberglass; and

(d) bonding the dried resin-impregnated layer of fiberglass to at least one surface of the layer of foamed thermoplastic material.